# EUROPÄISCHE PATENTANMELDUNG

(11) **EP 2 256 821 A2**
(43) Veröffentlichungstag der Anmeldung: **01.12.2010**
(21) Anmeldenummer: 10004931.1
(22) Anmeldetag: 10.05.2010
(51) Int. Cl.: H01L 31/042

(54) **Photovoltaische Anlage aus Dünnschichtsolarmodulen**

(30) Priorität: 26.05.2009 DE 102009022731
(71) Anmelder: Robert Bosch GmbH, 70469 Stuttgart (DE)
(72) Erfinder: Ludwig, Peter, 72072 Tübingen (DE); Lindemann, Uwe, 71088 Holzgerlingen (DE)
(74) Vertreter: Maiß, Harald

(57) **Zusammenfassung**

Die Erfindung betrifft eine Photovoltaische Anlage umfassend ein Vielzahl von rasterartig angeordneten, im Wesentlichen rechteckigen Solarmodulen (30a; 30d), wobei die Solarmodule (30a; 30d) jeweils aus wenigstens einer Glasplatte bestehen, die mit Solarzellen beschichtet ist, wobei eine Vielzahl von parallel beabstandeten, langgestreckten, im Wesentlichen starren Modulträgern (50) vorgesehen ist, die jeweils eine Modulträgerachse definieren, welche gegenüber der Horizontalen geneigt ist, wobei die Modulträger (50) an einem im Erdboden verankerbaren Grundgerüst festgelegt sind, und wobei die Solarmodule (30a; 30d) im Randbereich an den Modulträgern (50) befestig sind.

Erfindungsgemäß weisen sind die Modulträger (50) wenigstens eine sich in Richtung der Modulträgerachse erstreckende Aufnahmenut (54a; 54b) auf, derart das sich die Aufnahmenuten (54a; 54b) zweier benachbarter Modulträger (50) gegenüberstehen, wobei zwischen dem Solarmodul (30a; 30d) und der Aufnahmenut (54a; 54b) eine Gleitpaarung (11) mit geringer Reibung vorgesehen ist, so dass zwei gegenüberliegende Randbereiche eines Solarmoduls (30a; 30d) gleichzeitig in Richtung der Modulträgerachse in die zugeordneten Aufnahmenuten (54a; 54b) eingeschoben werden können.

## Beschreibung

Die Erfindung betrifft eine Photovoltaische Anlage gemäß dem Oberbegriff von Anspruch 1.

Aus der DE 20 2006 011 393 U1 ist eine photovoltaische Anlage bekannt. Gemäß den Fig. 1 und 2 der DE 20 2006 011 393 U1 umfasst die photovoltaische Anlage eine Vielzahl von rechteckigen Solarmodulen SM, die in einem Raster montiert sind. Bei den Solarmodulen handelt es sich um solche, die Dünnschichttechnik gefertigt sind. Hierbei wird eine Glasplatte mit Solarzellen beschichtet, wobei eine zweite Glasplatte vorgesehen ist, welche die Solarzellen abdeckt. Die beiden Glasplatten sind im Wesentlichen gleich groß und fest miteinander verklebt. Die äußere Gestalt eines derartigen Solarmoduls entspricht der einer einfachen Glasscheibe, man spricht auch von einem rahmenlosen Solarmodul. Derartige Solarmodule besitzen beispielsweise die Abmessungen 1300 mm × 1100 mm × 7 mm.

Die genannten Solarmodule sind jeweils mit Klemmbacken KL auf einem Modulträger MT befestigt, der sich in Richtung einer Modulträgerachse y erstreckt. Hierbei sind auf zwei benachbarten Modulträgem jeweils drei Solarmodule übereinander angeordnet. Der Modulträger und damit die Solarmodule sind gegenüber der Horizontalen H geneigt, damit die Sonnenstrahlen möglichst senkrecht auf die Solarmodule treffen, so dass sich eine möglichst große Stromausbeute ergibt.

Die Modulträger sind über ein Grundgerüst mit dem Erdboden EB fest verbunden. Hier ist eine Reihe von senkrechten Rammpfählen SF vorgesehen, die mit einer Ramme mehrere Meter tief in den Erdboden gerammt wurden. Die Rammpfähle bilden das feste Fundament der photovoltaischen Anlagen. Die Rammpfähle bestehen aus Stahlblech, welches in eine im Wesentlichen U-förmige Querschnittsform gebogen wurde. Am oberen Ende eines jeden Rammpfahls ist ein Verbindungsteil VE angeschraubt, an dem wiederum zwei beabstandete Längsträger LT1; LT2 befestigt sind. Die Längsträger erstrecken sich quer zur Modulträgerachse, wobei an einem Paar von Längsträgern jeweils eine Vielzahl von Modulträgern parallel beabstandet befestigt ist.

Der Nachteil dieser photovoltaischen Anlage besteht darin, dass die Solarmodule jeweils nur punktförmig geklemmt sind, so dass an den Einspannstellen sehr große Kräfte auf die Glasplatten der Solarmodule einwirken können. Hierbei ist anzumerken, dass photovoltaische Anlagen im Freien aufgestellt werden, so dass sie Wettereinflüssen und insbesondere Stürmen ausgesetzt sind. Die dabei auf die große Oberfläche der Solarmodule einwirkenden Windlasten können ohne weiteres zum Bruch der Glasplatten an den Einspannstellen führen. Ein weiterer Nachteil besteht in der aufwändigen Montage der vielen Klemmbacken. Weiter ist eine große Anzahl von Modulträgem erforderlich. Hierbei ist anzumerken, dass photovoltaische Anlagen typischerweise eine außerordentliche große Anzahl von Solarmodulen aufweisen, um eine genügend große elektrische Leistung zu erreichen. Dementsprechend ist eine große Anzahl von Befestigungsmittel erforderlich, so dass auch kleine Verbesserungen an einem einzigen Befestigungsmittel große Gesamteinsparungen nach sich ziehen können.

Aus der EP 531 869 A2 ist eine weitere photovoltaische Anlage bekannt. Hier ist eine gegenüber der Horizontalen geneigte Unterlage vorgesehen, auf der eine Vielzahl von waagerecht angeordneten Modulträgem angeordnet ist. Die rahmenlosen Solarmodule sind jeweils mit zwei gegenüberliegenden Randbereichen in Aufnahmenuten zweier benachbart angeordneter Modulträger angeordnet. Dabei ist zwischen den Aufnahmenuten und den Solarmodulen ein U-förmiges, elastisches Gummiband vorgesehen. Mit dem Gummiband wird das Solarmodul in der Aufnahmenut geklemmt, wobei durch die weiche Lagerung ein Bruch des Solarmoduls vermieden wird. Hierbei ist anzumerken, dass das Solarmodul unter Vorspannung in die Aufnahmenut eingebaut werden muss, damit auch unter Windlast kein Spiel zwischen der im Wesentlichen starren Aufnahmenut und dem Solarmodul entsteht. Dies könnte eine unerwünschte Lageänderung oder eine Beschädigung des Solarmoduls zur Folge haben.

Der Nachteil der photovoltaischen Anlage nach EP 531 869 A2 besteht darin, dass die Solarmodule quer zur Modulträgerachse in die Aufnahmenut eingeführt werden müssen, damit die Reibung des Gummibandes beim Einschieben nicht zu groß wird. Dies hat zur Folge, dass die Modulträger nach und nach zusammen mit den Solarmodulen montiert werden müssen. Es ist nicht möglich, zuerst die komplette Tragkonstruktion zu montieren und anschließend die Solarmodule auf der vormontierten Tragkonstruktion zu befestigen. Hierbei ist anzumerken, dass bei der zweiten Vorgehensweise weniger Montagepersonal benötigt wird, da hier alle anfallenden Arbeiten von einer oder höchstens zwei Personen durchgeführt werden können.

Aus der DE 20 2007 016 816 U1 ist eine Klemmvorrichtung bekannt, die auch bei der photovoltaischen Anlage gemäß der DE 20 2006 011 393 U1 zur Anwendung kommen kann. Die Klemmvorrichtung besteht aus zwei koextrudierten Kunststoffprofilen, die mit Hilfe von Schrauben gegeneinander verklemmt werden. Die beiden Kunststoffprofile besitzen jeweils einen elastischen Abschnitt, der an dem zugeordneten Solarmodul zur Anlage kommt. Weiter ist ein biegesteifer Abschnitt vorgesehen, der zur Übertragung der Klemmkräfte dient.

Die Aufgabe der Erfindung besteht darin, eine photovoltaische Anlage zu schaffen, die besonders einfach und mit wenig Personal montiert werden kann. Gleichzeitig soll die Anzahl der notwendigen Bauteile minimiert und deren Herstellung vereinfacht werden.

Gemäß dem Anspruch 1 wird diese Aufgabe dadurch gelöst, dass die Modulträger wenigstens eine sich in Richtung der Modulträgerachse erstreckende Aufnahmenut aufweisen, derart dass sich die Aufnahmenuten zweier benachbarter Modulträger gegenüberstehen, wobei zwischen dem Solarmodul und der Aufnahmenut eine Gleitpaarung mit geringer Reibung vorgesehen ist, so dass zwei gegenüberliegende Randbereiche eines Solarmoduls gleichzeitig in Richtung der Modulträgerachse in die zugeordneten Aufnahmenuten eingeschoben werden können. Unter einer Gleitpaarung sollen im Rahmen der vorliegenden Anmeldung zwei sich gleitfähig berührende Bauteile verstanden werden, wobei der Gleitkontakt eine niedrige Gleitreibungszahl aufweist. Die Gleitreibungszahl ist hierbei vorzugsweise kleiner als 0,4 und höchst vorzugsweise kleiner als 0,2. Insbesondere ist an die Materialpaarung Aluminium und Kunststoff, vorzugsweise Polyamid oder PTFE, gedacht.

Bei der vorgeschlagenen Lösung sind neben der Aufnahmenut keine besonderen Klemmelemente erforderlich. Ein einzelnes Solarmodul typischer Größe kann aufgrund der geringen Reibung der Gleitpaarung problemlos von einer einzigen Person in die Aufnahmenuten der vormontierten Modulträger eingeschoben werden. Die Modulträger mit den Aufnahmenuten können besonders kostengünstig aus Aluminium im Strangpressverfahren hergestellt werden. Darüber hinaus können an einem Modulträger wie aus der EP 531 869 A2 bekannt zwei Aufnahmenuten für zwei benachbarte Solarmodule vorgesehen werden, so dass sich die Anzahl der Modulträger gegenüber der Ausführungsform nach DE 20 2006 011 393 U1 auf die Hälfte reduziert.

In den abhängigen Ansprüchen sind vorteilhafte Weiterbildungen und Verbesserungen der Erfindung angegeben.

Die Gleitpaarung kann unmittelbar zwischen der Glasoberfläche des Solarmoduls und der Oberfläche der Aufnahmenut bestehen. Es ist jedoch besonders bevorzugt, wenn wenigstens ein gesondertes Gleitelement mit einer Gleitfläche vorgesehen ist, welches einen Partner der Gleitpaarung bildet, damit für die Gleitpaarung Werkstoffe mit besonders günstigen Gleiteigenschaften zum Einsatz kommen können. Das gesonderte Gleitelement kann hierbei als separates Bauteil ausgeführt sein. Es ist aber auch möglich, dass das gesonderte Gleitelement fest mit dem Solarmodul oder mit dem Modulträger verbunden ist. Selbstverständlich können auch beide Gleitpartner von einem gesonderten Gleitelement gebildet werden.

Das Gleitelement kann in Dickenrichtung des Solarmoduls zwischen der Aufnahmenut des Modulträgers und dem Solarmodul angeordnet sein, wobei das Gleitelement einen elastischen Abschnitt aufweist, der unter Vorspannung steht. Demnach wird das Solarmodul in der Aufnahmenut festgeklemmt, wobei die Klemmkraft durch den elastischen Abschnitt des Gleitelements gleichmäßig auf den Randbereich des Solarmoduls verteilt wird. Ein Bruch der Glasscheibe ist somit auszuschließen. Der elastische Abschnitt ist an dem Gleitelement vorgesehen, weil er auf diese Weise besonders kostengünstig bereit gestellt werden kann. Es ist besonders bevorzugt, wenn auf beiden Seiten des Solarmoduls ein entsprechendes Gleitelement zum Einsatz kommt.

Das Gleitelement kann als Profilkörper ausgeführt sein, wobei der elastische Abschnitt aus einem ersten elastomeren Kunststoff besteht, wobei die Gleitfläche von einem zweiten Kunststoff gebildet wird, der eine niedrigere Gleitreibungszahl aufweist als der erste Kunststoff, und wobei die beiden Kunststoffe vorzugsweise koextrudiert sind. Unter einem Profilkörper soll hierbei ein Körper verstanden werden, der entlang seiner Längsachse, die im vorliegenden Fall der Modulträgerachse entspricht, eine im Wesentlichen konstante Querschnittsform aufweist. Mit dem vorgeschlagenen Gleitelement können auf besonders kostengünstige Weise die für die einfache Montage des Solarmoduls erforderlichen Reibungs- und Elastizitätseigenschaften bereitgestellt werden. Insbesondere kann die Elastizität des Gleitelements durch Auswahl eines geeigneten Elastomers mit geeigneter Dicke über einen großen Bereich variiert werden, so dass vor jeden Einsatzfall (Windlast, Neigung der Module) eine geeignete Elastizität gewählt werden kann.

Das Gleitelement kann als separates Bauteil ausgeführt sein, wobei es den Randbereich des Solarmoduls U-förmig umschließt, wie diese von dem Gummiband der EP 531 869 A2 bekannt ist. Es ist jedoch besonders bevorzugt, wenn der elastische Abschnitt des Gleitelements mit einer Oberfläche der Glasplatte des Solarmoduls verklebt ist, wobei sich das Gleitelement um eine Ecke der Glasplatte herum erstreckt, so dass es eine Stirnfläche der Glasplatte wenigstens teilweise abdeckt. Unter der Stirnfläche der Glasplatte soll hierbei die schmale Oberfläche der Glasplatte verstanden werden, die parallel zur Dickenrichtung angeordnet ist. Die Gleitleiste kann bereits bei der Serienherstellung der Solarmodule angebracht werden, so dass der entsprechende Prozessschritt besonders kostengünstig ist. Dementsprechend wird für ein derartiges Solarmodul selbständiger Schutz angestrebt. Da das Gleitelement die Ecke der Glasplatte des Solarmoduls abdeckt, wird diese beim Transport vor Beschädigungen geschützt. Gleichzeitig wird das Einschieben des Solarmoduls in die Aufnahmenut des Modulträges vereinfacht, da ein Verschieben des Gleitelements gegenüber dem Solarmodul ausgeschlossen ist. Es ist besonders bevorzugt, wenn auf beiden Seiten des Solarmoduls jeweils ein gesondertes im Wesentlichen L-förmiges Gleitelement angeordnet ist, da die gesonderten Gleitelemente einfacher mit der Glasplatte verklebt werden können.

Wenigstens ein Teil der Modulträger kann entlang der Modulträgerachse eine im Wesentlichen konstante Querschnittsform aufweisen, wobei an diesen Modulträgem zwei benachbarte voneinander weg weisende Aufnahmenuten vorgesehen sind, wobei auf der der Sonne abgewandten Seite dieser Modulträger eine hinterschnittene Befestigungsnut vorgesehen ist, über die der Modulträger am Grundgerüst befestigt ist. Dieser Modulträger wird bevorzugt im Strangpressverfahren aus Aluminium hergestellt, so dass er besonders kostengünstig ist. Durch die vorgeschlagene Anordnung der verschiedenen Nuten ergibt sich ein besonders kompakter und Material sparender Modulträger. Die hinterschnittene Befestigungsnut ermöglicht eine besonders einfache Befestigung des Modulträgers am Grundgerüst.

Die Querschnittsform des Modulträgers kann auf der der Sonne zugewandten Seite T-förmig ohne Hinterschneidungen ausgebildet sein, wobei die beiden Aufnahmenuten unmittelbar von der T-Form begrenzt werden. Der Modulträger steht somit auf der der Sonne zugewandten Seite des Solarmoduls nur wenig über die aktive Oberfläche des Solarmoduls über. Damit ist der aktive Flächenanteil des Solarmoduls der durch den Modulträger abgeschattet wird besonders klein, so dass das Solarmodul eine hohe elektrische Leistung aufweist.

Die Aufnahmenut des Modulträgers kann eine Hinterschneidung aufweisen, wobei eine gesonderte Anschlagbaugruppe vorgesehen ist, die in die Hinterschneidung eingreift, wobei die Anschlagbaugruppe mit dem Modulträger verklemmbar ist, und wobei an der Anschlagbaugruppe eine Anschlagfläche vorgesehen ist, die an einer Stirnfläche des Solarmoduls anliegt. Da die Modulträger geneigt zur Horizontalen angeordnet sind, wirkt die Hangabtriebskomponente der Schwerkraft in Richtung der Aufnahmenut. Mit der Anschlagbaugruppe soll verhindert werden, dass die Solarmodule aufgrund ihres Eigengewichts aus der Aufnahmenut heraus rutschen. Durch die vorgeschlagene Befestigung der Anschlagbaugruppe in einer Hinterschneidung der Aufnahmenut kann ein besonders kompakter und damit Material sparender Modulträger bereitgestellt werden. Durch die vorgeschlagene Kombination aus Formschluss und Klemmung kann die Anschlagbaugruppe problemlos mit einer Hand montiert werden, so dass die andere Hand des Werkers zum Festhalten des Solarmoduls frei ist. Die Anschlagfläche wird bevorzugt von einem Elastomer gebildet, damit die Stirnfläche des Solarmoduls durch die Anschlagbaugruppe nicht beschädigt wird.

An einer Stirnfläche des Solarmoduls können zwei gesonderte Anschlagbaugruppen anliegen, die jeweils an einem der beiden dem Solarmodul zugeordneten Modulträger befestigt sind. Die Anschlagbaugruppen sind jeweils an einem einzigen Modulträger befestigt, so dass sie besonders schnell montiert werden können. Gleichzeitig können die beiden Anschlagmodule sehr kompakt ausgeführt werden, da es ausreicht, wenn die Solarmodule nur in der Nähe der Modulträger an den Anschlagbaugruppen anliegen. Die Handhabung der Anschlagbaugruppen ist daher besonders einfach.

Die Anschlagbaugruppe kann ein einziges Klemmmittel, vorzugsweise eine Klemmschraube, aufweisen. Die Anschlagbaugruppe kann somit besonders schnell montiert werden. Hierbei wird zuerst der formschlüssige Eingriff zwischen der Anschlagbaugruppe und dem Modulträger hergestellt. Dieser Eingriff ist so ausgelegt, dass die Anschlagbaugruppe in der beabsichtigten Einbauposition verbleibt, auch wenn sie vom Werker nicht mehr festgehalten wird. Der Werker hat somit eine freie Hand, mit der er nach dem Schraubwerkzeug greifen kann, um die Anschlagbaugruppe in einem einzigen Arbeitsschritt festzuklemmen.

Die Anschlagbaugruppe kann in die hinterschnittene Befestigungsnut eingreifen. Bei der oben beschriebenen Ausführungsform, bei der der Modulträger auf der der Sonne zugewandten Seiten ein T-förmiges Querschnittsprofil ohne Hinterschneidungen aufweist, kann nur auf der der Sonne abgewandten Seite der Aufnahmenut ein Formschluss zur Anschlagbaugruppe bereitgestellt werden. Hierdurch ergibt sich in der Regel kein ausreichender Halt für die Anschlagbaugruppe. Deshalb wird vorgeschlagen, dass die Anschlagbaugruppe zusätzlich in die hinterschnittene Befestigungsnut eingreift. Dies ist ohne weiteres möglich, da die Befestigungsnut nur auf einem kleinen Teilbereich ihrer Längserstreckung für die Befestigung des Modulträgers am Grundgerüst benötigt wird.

Es können mehrere Modulträger an wenigstens einem Längsträger befestigt sein, der sich in Richtung einer Längsachse erstreckt, die quer zur Modulträgerachse ausgerichtet ist, wobei zwischen wenigstens einem Solarmodul und dem Längsträger ein gesondertes Abstützteil vorgesehen ist. Die Befestigung einer Vielzahl von Modulträgem an einem Längsträger ist aus der DE 20 2006 011 393 U1 grundsätzlich bekannt. Bei der vorgeschlagenen Ausführungsform soll auch der Längsträger zur Abstützung des Solarmoduls herangezogen werden, damit dieses unter Windeinwirkung keine übermäßigen Verformungen erfährt. Das Abstützteil kann wahlweise nur am Längsträger befestigt sein, wobei das Solarmodul lose auf dem Abstützteil aufliegt. Bei dieser Ausführungsform kann allerdings nur Wind, der von der Sonnenseite des Solarmoduls her weht abgefangen werden. Damit Wind aus jeder Windrichtung abgefangen werden kann, muss das Abstützteil auch am Solarmodul befestigt werden, was beispielsweise mittels Kleben geschehen kann.

Die Erfindung wird im Folgenden anhand der beigefügten Zeichnungen näher erläutert. Es stellt dar:

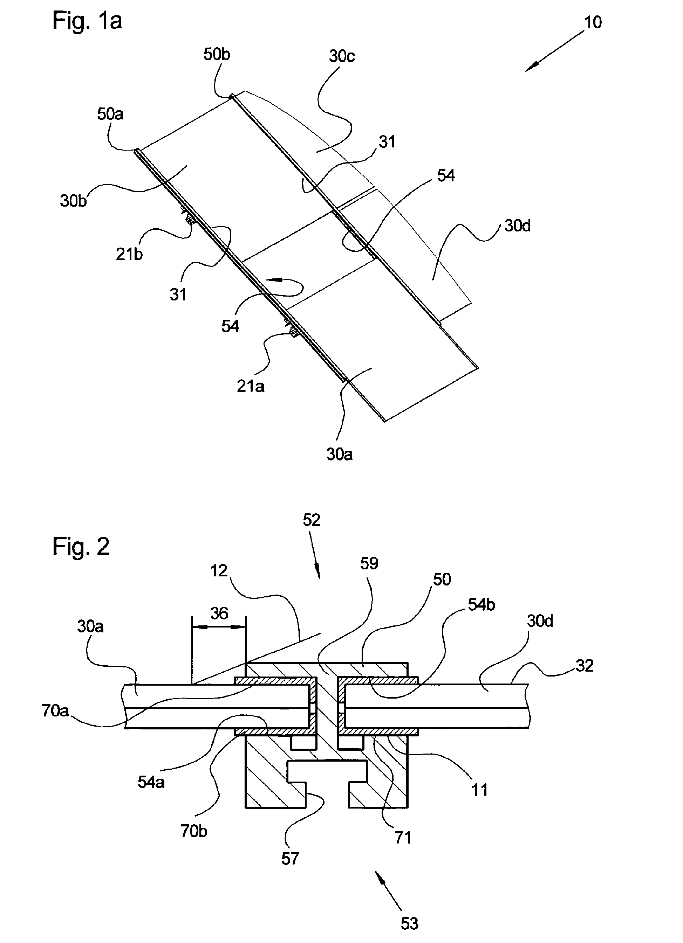

- Fig. 1: eine grobschematische Seitenansicht einer erfindungsgemäßen photovoltaischen Anlage;
- Fig. 1 a: eine perspektivische Ansicht einer erfindungsgemäßen photovoltaischen Anlage mit einem nur teilweise montierten Solarmodul;
- Fig. 2: einen Querschnitt eines Modulträgers mit eingesetztem Solarmodul;
- Fig. 3: einen Querschnitt eines Randbereichs eines Solarmoduls;
- Fig. 3a: einen Querschnitt eines Randbereichs eines Solarmoduls gemäß einer zweiten Ausführungsform der Erfindung;
- Fig. 4: eine grobschematische Draufsicht auf die rasterartig angeordneten Solarmodule;
- Fig. 4a: eine grobschematische Vorderansicht der Anordnung gemäß Fig. 4;
- Fig. 5: einen grobschematischen Querschnitt eines Modulträgers mit eingesetzten Anschlagbaugruppen; und
- Fig. 5a: eine Vorderansicht der Anschlagbaugruppen gemäß der zweiten Ausführungsform der Erfindung.

Fig. 1 zeigt eine grobschematische Seitenansicht einer erfindungsgemäßen photovoltaischen Anlage 10. Die photovoltaische Anlage 10 umfasst eine Reihe von in Längsrichtung 22 beabstandet angeordneten Rammpfählen 24, die mehrere Meter tief in den Erdboden 26 gerammt sind. Die Rammpfähle 24 bestehen aus Stahlblech, das in eine U-förmige Querschnittsform gebogen wurde, welche über die gesamte Länge eines Rammpfahls 24 konstant ist. Am oberen Ende der Rammpfähle 24 ist je ein Verbindungsteil 23 vorgesehen, das aus mehreren Stahlblechen zusammengeschweißt ist, wobei das Verbindungsteil 23 mit dem zugeordneten Rammpfahl 24 verschraubt ist. An der gegenüber der Horizontalen 25 geneigten Oberseite des Verbindungsteils 23 sind zwei parallel beabstandete Längsträger 21 a; 21 b befestigt, die sich in Richtung der Längsachse 22 erstrecken, die quer zur Erstreckungsrichtung der Rammpfähle 24 und im Wesentlichen parallel zur Horizontalen 25 ausgerichtet ist. Die Längsachse 22 erstreckt sich hierbei senkrecht zur Zeichenebene der Fig. 1. Weiter sind langgestreckte, im Wesentlichen starre Modulträger 50 vorgesehen, die auf den Längsträgern 21 a; 21 b quer zu diesen befestigt sind. Die Längsträger 21 a; 21 b, das Verbindungsteil 23 und die Rammpfähle 24 bilden zusammen das Grundgerüst 20 der photovoltaischen Anlage 10. Die Modulträger 50 folgen der Neigung der Verbindungsteile 23 und sind daher ebenfalls gegenüber der Horizontalen 25 geneigt.

Fig. 1a zeigt einen Ausschnitt der photovoltaischen Anlage 10 mit den rasterartig angeordneten, rechteckigen, identischen Solarmodulen 30a - 30d. Jedes Solarmodul 30a - 30d ist am Rand 31 in zwei parallelen Modulträgem 50a; 50b gehalten, an denen jeweils zwei sich gegenüberstehende Aufnahmenuten 54 vorgesehen sind, die sich in Richtung der Modulträgerachse (Nr. 51; Fig. 1) erstrecken. Es sind jeweils zwei Solarmodule 30a und 30b bzw. 30d und 30c übereinander angeordnet, wobei eine beliebig große Anzahl an Solarmodulen nebeneinander angeordnet sein kann.

Ein Solarmodul 30a ist in einer teilweise montierten Stellung gezeigt. Dieses Solarmodul 30a muss noch weiter in Richtung der Modulträgerachse (Nr. 51; Fig. 1) verschoben werden, um es in die gewünschte Einbaulage zu bringen.

Fig. 2 zeigt einen grobschematischen Querschnitt eines Modulträgers 50 mit zwei eingesetzten Solarmodulen 30a; 30d. Der Modulträger 50 ist aus Aluminium im Strangpressverfahren hergestellt, so dass er über die gesamte Länge eine konstante Querschnittsform aufweist. An dem Modulträger 50 sind benachbart zueinander zwei voneinander weg weisende Aufnahmenuten 54a; 54b vorgesehen, so dass an beiden Seiten des Modulträgers 50 Solarmodule 30a; 30d angebracht werden können. An der von der Sonne abgewandten Seite 53 des Modulträgers 50 ist eine hinterschnittene Befestigungsnut 57 vorgesehen, deren T-Form an bekannte Hammermuttern bzw. -schrauben angepasst ist.

An der der Sonne zugewandten Seite 52 besitzt der Modulträger 50 eine T-förmige Querschnittsform ohne Hinterschneidungen, so dass er nur wenig über die aktive Oberfläche 32 der Solarmodule 30 übersteht. Hiermit soll erreicht werden, dass die einfallenden Sonnenstrahlen 12 von dem Modulträger 50 kaum verdeckt werden, so dass die abgeschattete Fläche 36 des Solarmoduls 30 neben dem Modulträger 50 möglichst klein ist.

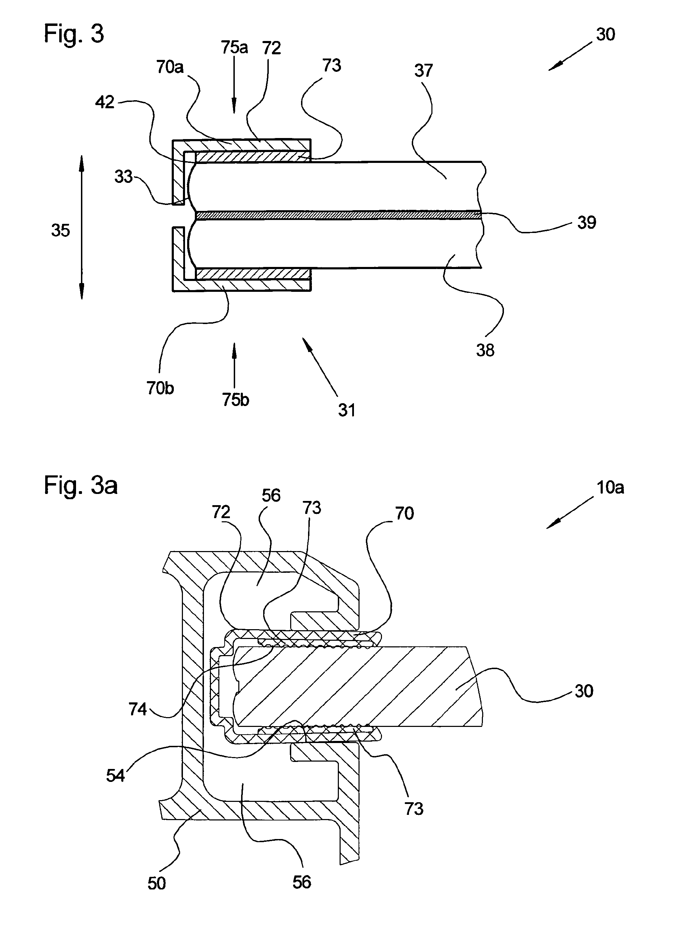

Hinzuweisen ist auf die Gleitelemente 70a; 70b, die mit Bezug auf Fig. 3 noch näher beschrieben werden. Auf beiden Seiten des Solarmoduls 30 ist je ein Gleitelement 70a; 70b vorgesehen, das sich über die gesamte Länge des zugeordneten Solarmoduls 30a; 30d erstreckt und fest mit diesem verbunden ist. Die Gleitelemente 70a; 70b bilden zusammen mit dem Modulträger 50 eine Gleitpaarung 11 mit geringer Reibung. Die Relativbewegung bei der Montage eines Solarmoduls 30a; 30d findet zwischen der Gleitfläche 71 des Gleitelements 70a; 70b und der Aufnahmenut 54a; 54b des Modulträgers 50 statt. Die Gleitfläche 71 des Gleitelements 70a; 70b besteht hierbei aus Polyamid, so dass sich in Verbindung mit dem Modulträger aus Aluminium eine kleine Gleitreibungszahl ergibt.

Fig. 3 zeigt den Randbereich 31 eines Solarmoduls 30 mit zwei aufgeklebten Gleitelementen 70a; 70b. Das Solarmodul 30 besteht aus einer ersten und einer zweiten Glasplatte 37; 38, die beide gleich groß und rechteckig sind. Auf die erste Glasplatte 37 sind die Solarzellen 39 im Dünnschichtverfahren aufgebracht, wobei die zweite Glasplatte 38 auf die Solarzellen 39 geklebt wurde, so dass diese vor Umgebungseinflüssen geschützt sind.

Am Rand des Solarmoduls 30 sind zwei in Dickenrichtung 35 gegenüberliegende Gleitelemente 70a; 70b vorgesehen. Die Gleitelemente 70a; 70b bestehen jeweils aus dem gleichen Profilmaterial, das im Koextrusionsverfahen aus zwei verschiedenen Kunststoffen hergestellt wurde. Zum einen ist ein elastischer Abschnitt 73 aus einem Elastomer vorgesehen, welcher unmittelbar auf die zugeordnete Glasplatte 37; 38 aufgeklebt ist. Der elastische Abschnitt ist mit einem Gleitabschnitt 72 aus Polyamid stoffschlüssig verbunden. Der Gleitabschnitt 72 ist insgesamt L-förmig ausgebildet, so dass er sich um die Ecke 42 der zugeordneten Glasplatte 70a; 70b herum erstreckt. Diese ist somit beim Transport des Solarmoduls 40 vor Beschädigung geschützt. An dem L-Schenkel, welcher dem elastischen Abschnitt zugeordnet ist, ist die Gleitfläche 71 vorgesehen, die in der Aufnahmenut des Modulträgers entlang gleitet. Mit dem anderen L-Schenkel wird die seitliche Stirnfläche 33 der zugeordneten Glasplatte 37; 38 wenigstens teilweise abgedeckt, so dass auch diese vor Beschädigungen geschützt ist. An dem Solarmodul 30 sind zwei gesonderte Gleitelemente 70a; 70b vorgesehen, damit diese jeweils in entgegen gesetzten Kleberichtungen 75a; 75b an dem Solarmodul 30 befestigt werden können. Die Klebung erfolgt hierbei senkrecht zur Oberfläche der entsprechenden Glasplatte 70a; 70b, damit die Dicke der Klebeschicht prozesssicher eingestellt werden kann.

Fig. 3 a zeigt eine zweite Ausführungsform 10a einer erfindungsgemäßen photovoltaischen Anlage, bei der ein separates U-förmiges Gleitelement 70 vorgesehen ist. Dieses Gleitelement 70 wird ebenfalls im Koextrusionsverfahren aus zwei Kunststoffen hergestellt, nämliche einem Elastomer, das die elastischen Abschnitte 73 bildet, und Polyamid zur Bildung des U-förmigen Gleitabschnitts 72. Dieses Gleitprofil 70 ist nicht mit dem Solarmodul 30 verklebt, es wird viel mehr nur durch Reibkräfte in seiner Position am Solarmodul 30 gehalten. Die U-Form des Gleitabschnitts 72 ist daher so bemessen, dass die beiden U-Schenkel mit Vorspannung an dem Solarmodul 30 anliegen. Weiter sind an den elastischen Abschnitten 73 mehrere Vorsprünge 74 vorgesehen, die eine Erhöhung der Reibung bewirken, so dass in jedem Fall sicher gestellt ist, dass sich das Gleitelement 70 beim Einschieben in die Aufnahmenut 54 nicht gegenüber dem Solarmodul verschiebt.

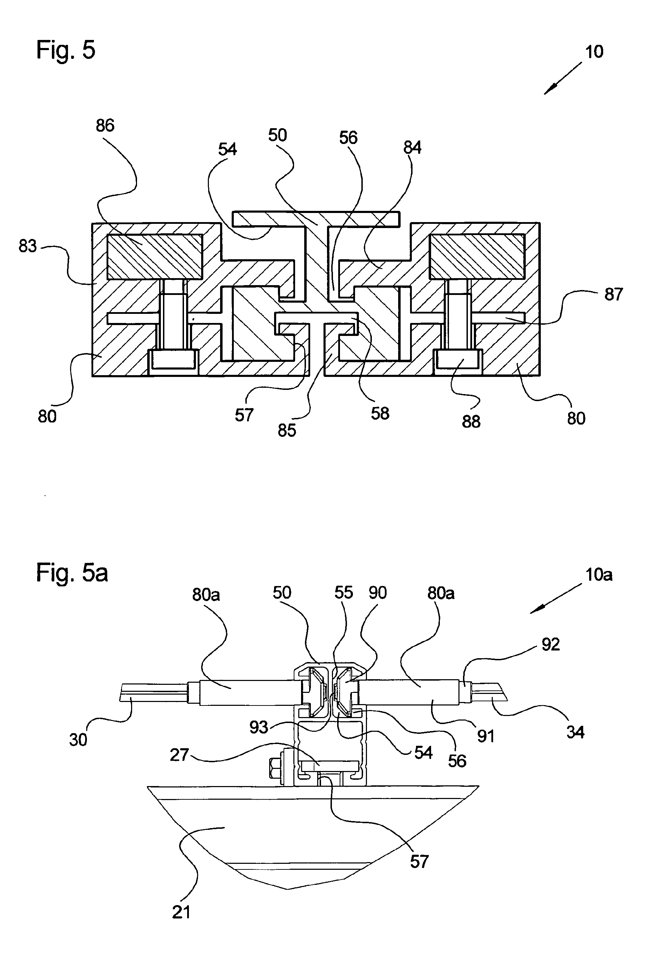

Hinzuweisen ist noch auf die T-förmige Aufnahmenut 54, die zu beiden Seiten des Solarmoduls 30 eine Hinterschneidung 56 aufweist. Diese Bauform hat zwar den Nachteil, dass durch den Modulträger 50 eine größere Fläche des Solarmoduls beschattet wird, im Gegenzug kann aber die einfachere Anschlagbaugruppe 80a gemäß Fig. 5a zum Einsatz kommen.

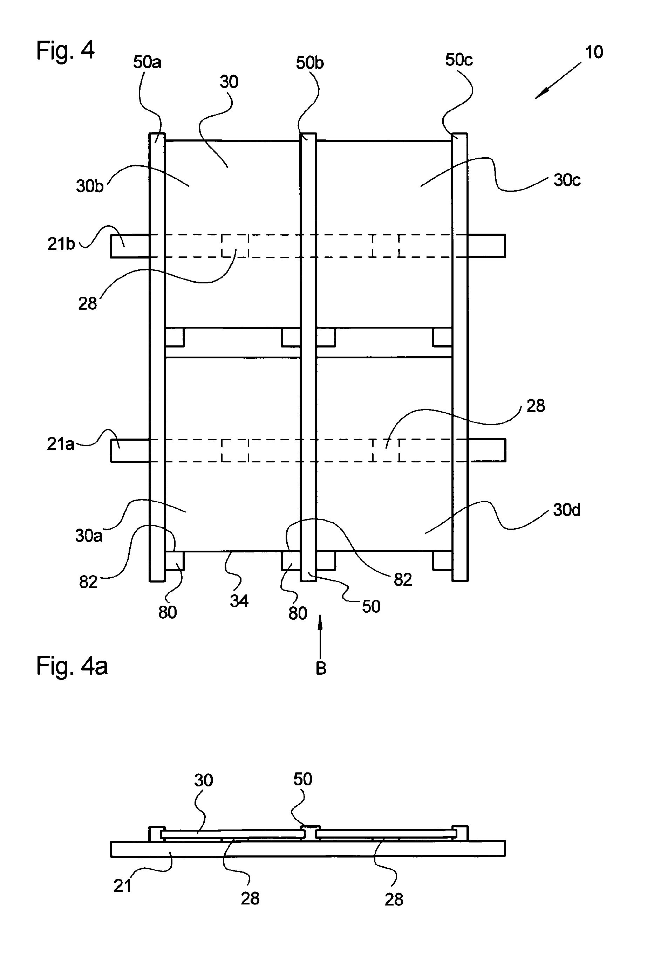

Fig. 4 zeigt eine Draufsicht der photovoltaischen Anlage 10 gemäß Fig. 1, wobei die Blickrichtung dort mit A gekennzeichnet ist. Die Solarmodule 30a - 30d sind insgesamt rasterartig angeordnet, wobei zwei Solarmodule 30a und 30b bzw. 30d und 30c übereinander und eine Vielzahl von Solarmodulen nebeneinander angeordnet sind, der Übersichtlichkeit halber sind jedoch nur zwei Solarmodulreihen nebeneinander gezeigt. Die Solarmodule 30a - 30d sind jeweils zwischen zwei benachbarten Modulträgem 50a - 50c aufgenommen, wobei an einem Teil der Modulträger 50b zu beiden Seiten Solarmodule 30 vorgesehen sind. Hiervon sind jedoch die Modulträger 50a; 50c am Rand der photovoltaischen Anlage 10 ausgenommen.

Die Modulträger 50a - 50c sind wiederum auf zwei parallelen Längsträgern 21a; 21b befestigt, die quer zu den Modulträgem 50a - 50c angeordnet sind. An der vorderen Stirnfläche 34 eines jeden Solarmoduls 30 sind je zwei Anschlagbaugruppen 80 vorgesehen, damit das Solarmodul nicht aus den Aufnahmenuten (Nr. 54a, 54b in Fig. 2) herausrutschen kann. Hierbei ist an den beiden Modulträgern 50, die einem Solarmodul 30 zugeordnet sind jeweils eine gesonderte Anschlagbaugruppe 80 vorgesehen, damit diese einfach montiert werden kann.

Fig. 4a zeigt eine Vorderansicht der photovoltaischen Anlage, wobei die Blickrichtung in Fig. 4 mit B gekennzeichnet ist. Zu erkennen ist das Abstützteil 28, das in Fig. 4 ebenfalls gestrichelt eingezeichnet ist. Das Abstützteil 28 ist zwischen jedem Solarmodul 30 und dem darunter verlaufenden Längsträger 21 vorgesehen, damit das Solarmodul 30 besser gegen Windlasten abgestützt ist. Das Abstützteil 28 ist auf die Rückseite des zugeordneten Solarmoduls 30 aufgeklebt und mit dem zugeordneten Längsträger 21 verschraubt. Es besteht aus einem Elastomer, so dass es sich bei der Montage in einem geringen Umfang verformen kann, um Montageverspannungen zu vermeiden.

Fig. 5 zeigt die Anschlagbaugruppe 80, die in den Modulträger 50 der photovoltaischen Anlage 10 eingreift. Der Grundkörper 83 der Anschlagbaugruppe 80 besteht aus einem kurzen Stück eines stranggepressten Aluminiumprofils. In dem Grundkörper 83 ist eine Ausnehmung vorgesehen, in der ein Gummieinsatz 86 aufgenommen ist, der die Anschlagfläche (Nr. 82; Fig. 4) der Anschlagbaugruppe bildet, die an der vorderen Stirnfläche (Nr. 34; Fig. 4) des Solarmoduls anliegt. Weiter sind an dem Grundkörper 83 zwei Eingreifabschnitte 84; 85 vorgesehen, wobei der erste Eingreifabschnitt 84 in die Hinterschneidung 56 der Aufnahmenut 54 formschlüssig eingreift, während der zweite Eingreifabschnitt 85 in eine der Hinterschneidungen 58 der Befestigungsnut 57 formschlüssig eingreift. Die Eingreifabschnitte 84; 85 sind so ausgelegt, dass der Grundkörper 83 auch ohne zusätzliche Klemmung mit geringer Vorspannung am Modulträger 50 anliegt, so dass er sich nicht durch sein Eigengewicht entlang der Aufnahmenut 54 verschiebt.

Weiter ist an der Anschlagbaugruppe 80 eine Klemmung vorgesehen, mit der erstgenannte am Modulträger 50 verklemmt werden kann. Hierfür ist in dem Grundkörper 83 der Anschlagbaugruppe 80 ein Schlitz 87 vorgesehen, so dass dieser elastisch verformbar ist und zwar derart, dass die beiden Eingreifabschnitte 84; 85 aufeinander zu bewegt werden können. Die entsprechende Klemmbewegung wird durch eine Klemmschraube 88 ausgeführt, die den Schlitz 87 durchsetzt. Die Anschlagbaugruppe 80 kann demnach durch Festdrehen einer einzigen Klemmschraube 88 mit dem Modulträger 50 verklemmt werden. Hinzuweisen ist noch darauf, dass alle Anschlagbaugruppen 80 der photovoltaischen Anlage 10 identisch ausgeführt sind.

Fig. 5a zeigt die Anschlagbaugruppe 80a der zweiten Ausführungsform der photovoltaischen Anlage 10a. Diese Anschlagbaugruppe 80a umfasst eine Hammermutter 90, die in die T-förmige Aufnahmenut 54 des Modulträgers 50 eingesetzt ist. Unmittelbar an der Hammermutter 90 liegt ein quaderförmiger Gummiklotz 91 an, der abschnittsweise in die Aufnahmenut 54 eingreift. In dem Gummiklotz 91 ist eine (nicht dargestellte) Durchgangsbohrung vorgesehen, die von einer Zylinderkopfschraube 92 durchsetzt ist, welche in die Hammermutter 90 eingeschraubt ist. Die Stirnfläche 93 der Zylinderkopfschraube 92 stützt sich am Nutgrund 55 der Aufnahmenut 54 ab, so dass die Hammermutter 90 gegen die Hinterschneidung 56 der Aufnahmenut 54 verspannt wird. Die Abmessungen des Gummiklotzes 91 sind hierbei so gewählt, dass dieser von der Zylinderkopfschraube 92 gleichzeitig gegen die Hammermutter 90 verspannt wird. Der Gummiklotz 91 ist somit fest mit dem Modulträger 50 verbunden, so dass sich die vordere Stirnfläche 34 des Solarmoduls 30 an diesem abstützen kann, wodurch ein Herausrutschen des Solarmoduls 30 aus der Aufnahmenut 54 verhindert wird. Die Anschlagfläche (Nr. 82; Fig. 4) der Anschlagbaugruppe 80a wird von einem Oberflächenabschnitt des quaderförmigen Gummiklotzes 91 gebildet.

Hinzuweisen ist noch auf die Hammerschraube 27, die in die T-förmige Befestigungsnut 57 des Modulträgers 50 eingreift. Mittels dieser Hammerschraube 27 ist der Modulträger 50 mit dem Längsträger 21 verschraubt.

### Bezugszeichenliste

- 10: photovoltaische Anlage
- 10a: photovoltaische Anlage (zweite Ausführungsform)
- 11: Gleitpaarung
- 12: Sonnenstrahl

- 20: Grundgerüst
- 21 a, b: Längsträger
- 22: Längsachse
- 23: Verbindungsteil
- 24: Rammpfahl
- 25: Horizontale
- 26: Erdboden
- 27: Hammerschraube
- 28: Abstützteil

- 30a - d: Solarmodul
- 31: Randbereich des Solarmoduls
- 32: aktive Oberfläche des Solarmoduls
- 33: seitliche Stirnfläche
- 34: vordere Stirnfläche
- 35: Dickenrichtung des Solarmoduls
- 36: abgeschattete Fläche
- 37: erste Glasplatte
- 38: zweite Glasplatte
- 39: Solarzellen
- 40: Klebung
- 41: Kleberichtung
- 42: Ecke der Glasplatte
- 50a - c: Modulträger
- 51: Modulträgerachse
- 52: der Sonne zugewandte Seite des Modulträgers
- 53: der Sonne abgewandte Seite des Modulträgers
- 54a, b: Aufnahmenut
- 55: Nutgrund der Aufnahmenut
- 56: Hinterschneidung der Aufnahmenut
- 57: Befestigungsnut
- 58: Hinterschneidung der Befestigungsnut
- 59: T-Form

- 70a, b: Gleitelement
- 71: Gleitfläche
- 72: Gleitabschnitt
- 73: elastischer Abschnitt
- 74: Vorsprung
- 75a, b: Kleberichtung

- 80: Anschlagbaugruppe
- 80a: Anschlagbaugruppe (zweite Ausführungsform)
- 82: Anschlagfläche
- 83: Grundkörper
- 84: erster Eingreifabschnitt
- 85: zweiter Eingreifabschnitt
- 86: Gummieinsatz
- 87: Schlitz
- 88: Klemmschraube

- 90: Hammermutter
- 91: Gummiklotz
- 92: Zylinderkopfschraube
- 93: Stirnfläche der Zylinderkopfschraube

## Patentansprüche

1. Photovoltaische Anlage (10; 10a) umfassend ein Vielzahl von rasterartig angeordneten, im Wesentlichen rechteckigen Solarmodulen (30; 30a - 30d), wobei die Solarmodule (30; 30a - 30d) jeweils aus wenigstens einer Glasplatte (37; 38) bestehen, die mit Solarzellen (39) beschichtet ist, wobei eine Vielzahl von parallel beabstandeten, langgestreckten, im Wesentlichen starren Modulträgem (50; 50a - 50c) vorgesehen ist, die jeweils eine Modulträgerachse (51) definieren, welche gegenüber der Horizontalen (25) geneigt ist, wobei die Modulträger (50; 50a - 50c) an einem im Erdboden (26) verankerbaren Grundgerüst (20) festgelegt sind, und wobei die Solarmodule (30; 30a - 30d) im Randbereich (31) an den Modulträgem (50; 50a - 50c) befestig sind,
**dadurch gekennzeichnet, dass** die Modulträger (50; 50a - 50c) wenigstens eine sich in Richtung der Modulträgerachse (51) erstreckende Aufnahmenut (54; 54a; 54b) aufweisen, derart das sich die Aufnahmenuten (54; 54a; 54b) zweier benachbarter Modulträger (50; 50a - 50c) gegenüberstehen, wobei zwischen dem Solarmodul (30; 30a - 30d) und der Aufnahmenut (54; 54a; 54b) eine Gleitpaarung (11) mit geringer Reibung vorgesehen ist, so dass zwei gegenüberliegende Randbereiche (31) eines Solarmoduls (30; 30a - 30d) gleichzeitig in Richtung der Modulträgerachse (51) in die zugeordneten Aufnahmenuten (54; 54a; 54b) eingeschoben werden können.

2. Photovoltaische Anlage nach Anspruch 1,
dass die Gleitreibungszahl der Gleitpaarung (11) kleiner als 0,4 und vorzugsweise kleiner als 0,2 ist.

3. Photovoltaische Anlage nach Anspruch 1 oder 2,
**dadurch gekennzeichnet, dass** das Solarmodul (30; 30a - 30d) spielfrei und vorzugsweise unter Vorspannung in den zugeordneten Aufnahmenuten (54; 54a; 54b) aufgenommen ist.

4. Photovoltaische Anlage nach einem der vorstehenden Ansprüche,
**dadurch gekennzeichnet, dass** wenigstens ein gesondertes Gleitelement (70; 70a; 70b) mit einer Gleitfläche (71) vorgesehen ist, welches einen Partner der Gleitpaarung (11) bildet.

5. Photovoltaische Anlage nach einem der vorstehenden Ansprüche,
**dadurch gekennzeichnet, dass** das Gleitelement (70; 70a; 70b) in Dickenrichtung (35) des Solarmoduls (30; 30a - 30d) zwischen der Aufnahmenut (54; 54a; 54b) des Modulträgers (50; 50a - 50c) und dem Solarmodul (30; 30a-30d) angeordnet ist, wobei das Gleitelement (70; 70a; 70b) einen elastischen Abschnitt (73) aufweist, der unter Vorspannung steht.

6. Photovoltaische Anlage nach Anspruch 5,
**dadurch gekennzeichnet, dass** das Gleitelement (70; 70a; 70b) als Profilkörper ausgeführt ist, wobei der elastische Abschnitt (73) aus einem ersten elastomeren Kunststoff besteht, wobei die Gleitfläche (71) von einem zweiten Kunststoff gebildet wird, der eine niedrige Gleitreibungszahl aufweist als der erste Kunststoff, und wobei die beiden Kunststoffe vorzugsweise koextrudiert sind.

7. Photovoltaische Anlage nach Anspruch 5 oder 6,
**dadurch gekennzeichnet, dass** der elastische Abschnitt (73) des Gleitelements (70; 70a; 70b) mit einer Oberfläche der Glasplatte (37; 38) des Solarmoduls (30; 30a - 30d) verklebt ist, wobei sich das Gleitelement (70; 70a; 70b) um eine Ecke (42) der Glasplatte (37; 38) herum erstreckt, so dass es eine Stirnfläche (33) der Glasplatte (37; 38) wenigstens teilweise abdeckt.

8. Photovoltaische Anlage nach einem der vorstehenden Ansprüche,
**dadurch gekennzeichnet, dass** wenigstens ein Teil der Modulträger (50;
50a - 50c) entlang der Modulträgerachse (51) eine im Wesentlichen konstante Querschnittsform aufweisen, wobei an diesen Modulträgern (50; 50a - 50c) zwei benachbarte voneinander weg weisende Aufnahmenuten (54a; 54b) vorgesehen sind, wobei auf der der Sonne abgewandten Seite (53) dieser Modulträger (54a; 54b) eine hinterschnitte Befestigungsnut (57) vorgesehen ist, über die der Modulträger (50; 50a - 50c) am Grundgerüst (20) befestigt ist.

9. Photovoltaische Anlage nach Anspruch 8,
**dadurch gekennzeichnet, dass** die Querschnittsform des Modulträgers (50;
50a - 50c) auf der der Sonne zugewandten Seite (52) T-förmig ohne Hinterschneidungen ausgebildet ist, wobei die beiden Aufnahmenuten (54a; 54b) unmittelbar von der T-Form (59) begrenzt werden.

10. Photovoltaische Anlage nach einem der vorstehenden Ansprüche,
**dadurch gekennzeichnet, dass** die Aufnahmenut (50; 54a; 54b) des Modulträgers (50; 50a - 50c) eine Hinterschneidung (56) aufweist, wobei eine gesonderte Anschlagbaugruppe (80; 80a) vorgesehen ist, die in die Hinterschneidung (56) eingreift, wobei die Anschlagbaugruppe (80; 80a) mit dem Modulträger (50; 50a - 50c) verklemmbar ist, und wobei an der Anschlagbaugruppe (80; 80a) ein Anschlagfläche (82) vorgesehen ist, die an einer Stirnfläche (34) des Solarmoduls (30; 30a - 30d) anliegt.

11. Photovoltaische Anlage nach Anspruch 10,
**dadurch gekennzeichnet, dass** die Anschlagfläche (82) von einem Elastomer gebildet wird.

12. Photovoltaische Anlage nach Anspruch 10 oder 11,
**dadurch gekennzeichnet, dass** an einer Stirnfläche (34) des Solarmoduls (30; 30a - 30d) zwei gesonderte Anschlagbaugruppen (80; 80a) anliegen, die jeweils an einem der beiden dem Solarmodul (30; 30a - 30d) zugeordneten Modulträger (50; 50a - 50c) befestigt sind.

13. Photovoltaische Anlage nach einem der Ansprüche 10 bis 13,
**dadurch gekennzeichnet, dass** die Anschlagbaugruppe (80; 80a) ein einziges Klemmmittel, vorzugsweise eine Klemmschraube (88; 92), aufweist.

14. Photovoltaische Anlage nach einem der vorstehenden Ansprüche,
**dadurch gekennzeichnet, dass** mehrere Modulträger (50; 50a - 50c) an wenigstens einem Längsträger (21 a; 21 b) befestigt sind, der sich in Richtung einer Längsachse (22) erstreckt, die quer zur Modulträgerachse (51) ausgerichtet ist, wobei zwischen wenigstens einem Solarmodul (30; 30a - 30d) und dem Längsträger (21a; 21b) ein gesondertes Abstützteil (28) vorgesehen ist.

15. Solarmodul (30; 30a - 30d) bestehend aus wenigstens einer Glasplatte (37; 38), die mit Solarzellen (39) beschichtet ist,
**dadurch gekennzeichnet, dass** in einem Randbereich (31) der Glasplatte (37; 38) ein Gleitelement (70; 70a; 70b) vorgesehen ist, das als Profilkörper ausgeführt ist, wobei das Gleitelement (70; 70a; 70b) einen elastischen Abschnitt (73) aus einem ersten elastomeren Kunststoff aufweist, wobei an dem Gleitelement (70; 70a; 70b) weiter eine Gleitfläche (71) vorgesehen ist, die von einem zweiten Kunststoff gebildet wird, der eine niedrige Gleitreibungszahl aufweist als der erste Kunststoff, wobei der elastische Abschnitt (73) des Gleitelements (70; 70a; 70b) mit einer Oberfläche der Glasplatte (37; 38) des Solarmoduls (30; 30a - 30d) verklebt ist, und wobei sich das Gleitelement (70; 70a; 70b) um eine Ecke (42) der Glasplatte (37; 38) herum erstreckt, so dass es eine Stirnfläche (33) der Glasplatte (37; 38) wenigstens teilweise abdeckt.
